# EUROPÄISCHE PATENTANMELDUNG

(11) **EP 2 566 026 A1**
(43) Veröffentlichungstag der Anmeldung: **06.03.2013**
(21) Anmeldenummer: 11179825.2
(22) Anmeldetag: 02.09.2011
(51) Int. Cl.: H02M 3/158, H02J 7/00

(54) **Gleichspannungssteller**

(71) Anmelder: voltwerk electronics GmbH, 20537 Hamburg (DE)
(72) Erfinder: Knaup, Peter, 64673 Zwingenberg (DE)
(74) Vertreter: Eisenführ, Speiser & Partner

(57) **Zusammenfassung**

Die Erfindung betrifft eine Schaltungsanordnung (1) zum Bereitstellen einer Zwischenkreisspannung (U_{ZK}), wobei die Zwischenkreisspannung (U_{ZK}) zwischen einem ersten und zweiten Ausgangsknoten (2, 4) anliegt, umfassend einen zwischen dem ersten Ausgangsknoten (2) und einem Nullpunkt (N) angeordneten ersten Spannungsausgang zum Anschließen einer ersten Kondensatoreinheit (C₁), einen zwischen dem Nullpunkt (N) und dem zweiten Ausgangsknoten (4) angeordneten zweiten Spannungsausgang zum Anschließen einer zweiten Kondensatoreinheit (C₂), einen ersten und einen zweiten Eingangsknoten (12, 14) zum Anschließen einer Gleichspannungsquelle (8) zum Bereitstellen einer Gleichspannung (U_{S}) mit einer kleineren Spannungsamplitude als die Amplitude der Zwischenkreisspannung (U_{ZK}), eine Spuleneinheit (L), ein erstes Schaltmittel (S₁), das zusammen mit der Spuleneinheit (L) im Hochsetzstellerbetrieb betreibbar ist, um elektrische Energie aus der Gleichspannungsquelle (8) in die erste Kondensatoreinheit (C₁) zu übertragen und ein zweites Schaltmittel (S₂), das zusammen mit der Spuleneinheit (L) im Hochsetzstellerbetrieb betreibbar ist, um elektrische Energie aus der Gleichspannungsquelle (8) in die zweite Kondensatoreinheit (C₂) zu übertragen.

## Beschreibung

Die vorliegende Erfindung betrifft eine Schaltungsanordnung zum Bereitstellen einer Gleichspannung, insbesondere einer Zwischenkreisspannung. Außerdem betrifft die vorliegende Erfindung eine Solaranlage sowie einen Wechselrichter.

Zur Speicherung von z. B. durch Photovoltaikanlagen erzeugter elektrischer Energie in Batterien o. ä. aufladbaren, elektrischen Speichern muss die Batterie über eine leistungselektronische Schaltung, die üblicherweise auch Steller genannt wird, an einen Gleichspannungszwischenkreis eines Wechselrichters angekoppelt werden. Dieser Steller muss üblicherweise Energie in die Batterie speisen und aus der Batterie entnehmen können, wobei auch grundsätzlich für das Einspeisen und Entnehmen jeweils separate und/oder eigenständige Einheiten vorgesehen sein könnten. Der Steller überträgt somit Energie aus der Batterie in den Gleichspannungszwischenkreis und/oder umgekehrt und berücksichtigt dabei die unterschiedlichen Spannungsamplituden zwischen der Batterie und dem Gleichspannungszwischenkreis.

Oftmals werden Batterien verwendet, die eine verhältnismäßig geringe Batteriespannung von beispielsweise weniger als 300 V aufweisen. Im Falle des Europäischen Verbundnetzes und bei Verwendung eines Wechselrichters in Halbbrückentopologie beträgt die Spannung im Gleichspannungszwischenkreis, nämlich die Zwischenkreisspannung, hingegen etwa 700 V. Entsprechend muss der Steller die meist niedrige Batteriespannung auf die hohe Zwischenkreisspannung speisen. Dabei entstehen hohe Verluste. Es können sich bei anderen Wechselspannungsnetzen und/oder bei Verwendung anderer Wechselrichtertopologien andere Spannungswerte einstellen bzw. typischer Weise verwendet werden. Das beschriebene Spannungsverhältnis von 300 : 700, also weniger als 0,5, ist aber für andere absolute Spannungswerte auch typisch.

Ein weiteres Problem entsteht im Falle eines Backup-Modus. Hierbei werden bei Ausfall des elektrischen Versorgungsnetzes, in das gespeist wird, Verbraucher direkt aus dem Wechselrichter, der mit der Photovoltaikanlage verbunden ist, gespeist. Durch einseitige Lasten bestimmter Verbraucher wie z.B. durch einen Haarfön, die nur die positive oder negative Halbwelle belasten, tritt der Effekt auf, dass diese den Gleichspannungszwischenkreis schief ziehen. Das bedeutet, dass die Zwischenkreisspannung nicht symmetrisch um den Nullpunkt liegt, sondern dass insbesondere bei einem Zwischenkreis aus zwei in Reihe geschalteten Kondensatoren der eine Kondensator stärker geladen ist als der andere Kondensator.

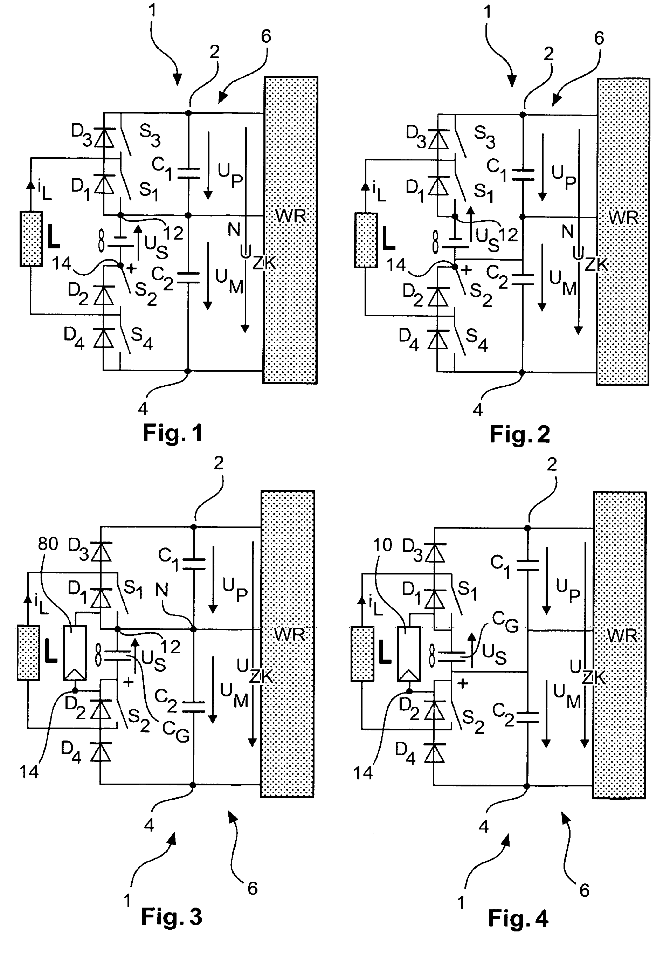

Solchen sogenannten Schieflastbedingungen kann auf unterschiedliche Weise begegnet werden. Beispielsweise kann bei einem Gleichspannungszwischenkreis mit Nullpunktabgriff wechselrichterseitig für einen Ausgleich gesorgt werden. Eine solche Schaltung ist beispielsweise in dem europäischen Patent EP 1 861 914 B1 in der Fig. 2 dargestellt.

Grundsätzlich ist es auch möglich, die beiden in Reihe geschalteten Zwischenkreiskondensatoren im Falle einer Schieflast gezielt umzuladen. Hierzu sind aber keine einfachen Lösungen bekannt, sondern ein solches Umladen würde vielmehr zusätzliche Schaltungselemente mit entsprechenden Bauteilen erforderlich machen. Zudem würde ein aktives Umladen zu unerwünschten Verlusten führen.

Aufgabe der vorliegenden Erfindung war es somit, eine Lösung vorzuschlagen, die wenigstens eines der oben genannten Probleme adressiert. Insbesondere soll eine Lösung vorgeschlagen werden, bei der mit möglichst wenig Bauteileinsatz und/oder unter möglichst geringen Verlusten Energie zwischen einem elektrischen Energiespeicher und einem Gleichspannungszwischenkreis übertragen werden kann und/oder mit der in einem Gleichspannungszwischenkreis eine möglichst symmetrische Gleichspannung erreicht werden kann. Zumindest soll eine alternative Lösung vorgeschlagen werden. Erfindungsgemäß wird eine Schaltungsanordnung gemäß Anspruch 1 vorgeschlagen. Diese Schaltungsanordnung ist vorbereitet zum Bereitstellen einer Zwischenkreisspannung zwischen einem ersten und einem zweiten Ausgangsknoten. Dabei ist ein erster Spannungsausgang zwischen dem ersten Ausgangsknoten und einem Nullpunkt angeordnet bzw. der erste Spannungsknoten und der Nullpunkt bilden zusammen den ersten Spannungsausgang. An diesem ersten Spannungsausgang ist bestimmungsgemäß eine erste Kondensatoreinheit angeschlossen. Weiterhin ist ein zweiter Spannungsausgang vorgesehen, der zwischen dem Nullpunkt und dem zweiten Ausgangsknoten angeordnet ist bzw. der Nullpunkt und der zweite Spannungsknoten bilden zusammen den zweiten Spannungsausgang. An diesem zweiten Ausgangsknoten ist eine zweite Kondensatoreinheit bestimmungsgemäß angeschlossen. Die erste und die zweite Kondensatoreinheit sind zueinander in Reihe geschaltet und beide Kondensatoreinheiten zusammen bilden einen Gleichspannungszwischenkreis oder zumindest einen wesentlichen Teil davon. Der Nullpunkt bildet hierbei einen mittleren Abgriff zwischen den beiden Kondensatoreinheiten.

Weiterhin sind ein erster und ein zweiter Eingangsknoten vorgesehen, an denen eine Gleichspannungsquelle zum Bereitstellen einer Gleichspannung bestimmungsgemäß angeschlossen ist. Eine solche Gleichspannungsquelle liefert eine Gleichspannung, die insbesondere kleiner als die Zwischenkreisspannung ist. Vorzugsweise ist die Gleichspannung der Gleichspannungsquelle etwa halb so groß wie die Zwischenkreisspannung oder noch kleiner. Die Spannungsamplitude der Gleichspannungsquelle kann auch größere Werte annehmen. Besonders vorteilhaft arbeitet die erfindungsgemäße Schaltungsanordnung bei Gleichspannungen, die eine kleinere Amplitude als die halbe Amplitude der Zwischenkreisspannung aufweisen.

Weiterhin ist eine Spuleneinheit vorgesehen, die in der Schaltungsanordnung zumindest in einem Hochsetzstellerbetrieb Verwendung findet.

Weiterhin ist ein erstes Schaltmittel vorgesehen, das zusammen mit der Spuleneinheit im Hochsetzstellerbetrieb betreibbar ist, um elektrische Energie aus der Gleichspannungsquelle in die erste Kondensatoreinheit zu übertragen. Dieses erste Schaltmittel wird dabei gepulst betrieben, um - wie im Grunde bei einem Hochsetzsteller bekannt - im geschlossenen Zustand einen Strom mittels der Gleichstromquelle in der Spuleneinheit zu erzeugen. Durch Öffnen des Schalters ist die Spuleneinheit bestrebt, den erzeugten Strom zu halten und die Schaltungsanordnung ist so aufgebaut, dass dieser Strom dazu führt, elektrische Energie, die im Grunde in der Spuleneinheit durch den erzeugten Strom gespeichert ist, in die ersten Kondensatoreinheit zu leiten. Hierbei wird die Energie gezielt und im Grunde nur in die erste Kondensatoreinheit übertragen, nicht jedoch in die zweite Kondensatoreinheit. Hat die Gleichspannungsquelle eine Spannungsamplitude, die etwas geringer als die halbe Spannungsamplitude der Zwischenkreisspannung beträgt, so ist die Amplitude der Gleichspannungsquelle nur etwas geringer als die Spannung an der ersten Kondensatoreinheit, setzt man eine etwa symmetrische Aufteilung der Zwischenkreisspannung voraus. Der beschriebene Hochsetzstellerbetrieb von der Gleichspannungsquelle in die erste Kondensatoreinheit muss somit nur einen geringen Spannungshub schaffen.

Weiterhin ist ein zweites Schaltmittel vorgesehen, das zusammen mit der Spuleneinheit im Hochsetzstellerbetrieb elektrische Energie aus der Gleichspannungsquelle in die zweite Kondensatoreinheit überträgt. Der Hochsetzstellerbetrieb wird sinngemäß wie oben zusammen mit der ersten Schalteinheit beschrieben wurde ausgeführt. Dabei wird dieselbe Spuleneinheit verwendet und es ist somit nur eine Spuleneinheit für beide Hochsetzstellerbetriebe notwendig. Während das erste Schaltmittel im Hochsetzstellerbetrieb arbeitet und dafür die Spuleneinheit verwendet, arbeitet das zweite Schaltmittel nicht im Hochsetzstellerbetrieb und ist vielmehr geschlossen. Umgekehrt ist das erste Schaltmittel geschlossen, wenn das zweite Schaltmittel im Hochsetzstellerbetrieb arbeitet.

Hierdurch können beide Kondensatoreinheiten im Wechsel mit Energie aus der Gleichspannungsquelle versorgt, nämlich geladen werden. Bei nur geringem Spannungshub von der Gleichspannungsquelle zu jeweils einer der beiden Kondensatoreinheiten und einem entsprechend verlustarmen Betrieb wird im Ergebnis eine wesentlich höhere Zwischenkreisspannung, nämlich als Summe der Spannungen an der ersten und zweiten Kondensatoreinheit erreicht.

Bei einer ungleichmäßigen Belastung der beiden Kondensatoreinheiten, wenn also eine Schieflastbedingung vorliegt, kann auf einfache Weise ein Ausgleich geschaffen werden, indem die stärker belastete Kondensatoreinheit auch stärker aufgeladen wird. Ein Umladen der Kondensatoreinheiten oder eine Berücksichtigung auf der Wechselrichterseite des Gleichspannungszwischenkreises wird entbehrlich. Auch der schaltungstechnische Aufwand ist geringer.

Es ist zu beachten, dass die jeweilige Kondensatoreinheit beispielsweise durch einen Kondensator oder eine Verschaltung mehrerer Kondensatoren aufgebaut sein kann. Als Schalteinheiten werden vorzugsweise Halbleiterschalter wie IGBTs verwendet. Es sind aber auch andere Schalteinheiten einschließlich anderer Halbleiterschalter möglich, die der Fachmann aufgrund der jeweiligen Aufgabe, insbesondere der jeweiligen Dimensionierung, auswählt.

Als Spuleneinheit kann beispielsweise eine einzelne Spule, die oftmals auch vereinfacht als Induktivität bezeichnet wird, verwendet werden, wobei auch eine Verschaltung mehrerer Induktivitäten in Betracht kommt.

Gemäß einer weiteren Ausführungsform weist die Schaltungsanordnung ein drittes Schaltmittel auf, das zusammen mit der Spuleneinheit im Tiefsetzstellerbetrieb betreibbar ist und in diesem Tiefsetzstellerbetrieb elektrische Energie aus der ersten Kondensatoreinheit in die Gleichspannungsquelle überträgt. Das dritte Schaltmittel wird hierbei gepulst betrieben und arbeitet zusammen mit der Spuleneinheit - im Grunde in gekannter Weise - als Tiefsetzsteller, um elektrische Energie aus der ersten Kondensatoreinheit in die Gleichspannungsquelle zu übertragen.

Außerdem ist ein viertes Schaltmittel vorgesehen, das zusammen mit der Spuleneinheit im Tiefsetzstellerbetrieb betreibbar ist und im Tiefsetzstellerbetrieb elektrische Energie aus der zweiten Kondensatoreinheit in die Gleichspannungsquelle überträgt. Dieses zweite Schaltmittel arbeitet zusammen mit der Spuleneinheit grundsätzlich in gleicher Art und Weise im Tiefsetzstellerbetrieb wie das dritte Schaltmittel mit der Spuleneinheit. Das dritte und vierte Schaltmittel verwenden hierbei dieselbe Spuleneinheit, insbesondere dieselbe Spuleneinheit wie das erste und zweite Schaltmittel im Hochsetzstellerbetrieb verwenden. Entsprechend wechseln sich das dritte und das vierte Schaltmittel jeweils mit ihrem Tiefsetzstellerbetrieb ab. Insgesamt verwenden das erste, das zweite, das dritte und das vierte Schaltmittel dieselbe Spuleneinheit in dem beschriebenen Hochsetzstellerbetrieb bzw. Tiefsetzstellerbetrieb. Entsprechend ist nur eine Spuleneinheit vorgesehen, die üblicherweise ein teures und schweres Bauteil darstellt und weitere Spuleneinheiten können in diesem Zusammenhang vermieden werden.

Die beschriebenen Tiefsetzstellerbetriebe können insbesondere dann verwendet werden, wenn für das elektrische Versorgungsnetz, in das einzuspeisen ist, ein Energieüberangebot besteht und diese Energie in der Gleichspannungsquelle, die für diesen Fall als wiederaufladbarer elektrischer Energiespeicher, wie eine aufladbare Batterie, ausgestaltet sein kann, zwischengespeichert wird. Wenn der Bedarf im Versorgungsnetz wieder steigt, kann die zwischengespeicherte Energie verwendet werden. Auch beim Übertragen elektrischer Energie aus dem Gleichspannungszwischenkreis in die Gleichspannungsquelle kann eine Steuerung der Tiefsetzstellerbetriebe mittels des dritten oder vierten Schaltmittels so erfolgen, dass die Spannung im Gleichspannungszwischenkreis symmetriesiert wird. Das Abnehmen elektrischer Energie aus der ersten und zweiten Kondensatoreinheit erfolgt somit derart, dass beide Kondensatoreinheiten etwa gleiche Spannungen aufweisen.

Vorzugsweise ist das erste Schaltmittel in Reihe mit dem dritten Schaltmittel zwischen dem Nullpunkt und dem ersten Ausgangsknoten und dabei parallel zu der ersten Kondensatoreinheit angeschlossen und das zweite Schaltmittel ist in Reihe mit dem vierten Schaltmittel zwischen dem Nullpunkt und dem zweiten Ausgangsknoten und damit parallel zu der zweiten Kondensatoreinheit angeschlossen. Mit anderen Worten, sind das dritte, das erste, das zweite und das vierte Schaltmittel in dieser Reihenfolge und ggf. zusätzlich mit der Gleichspannungsquelle in Reihe zueinander und dabei insgesamt parallel zum Gleichspannungszwischenkreis geschaltet. Zwischen der ersten und der zweiten Schalteinheit ist der Nullpunkt angeordnet. Insbesondere hierbei kann die Gleichspannungsquelle vorzugsweise zwischen dem ersten und zweiten Schaltmittel angeordnet sein, wobei der Nullpunkt an dem ersten Eingangsknoten und damit dem ersten Schaltmittel und der Gleichspannungsquelle angeschlossen ist oder der Nullpunkt ist an dem zweiten Eingangsknoten und entsprechend dem zweiten Schaltmittel und der Spannungsquelle angeschlossen. Die Spuleneinheit ist für beide Fälle vorzugsweise parallel zu der Reihenschaltung angeschlossen, die aus dem ersten Schaltmittel, der Gleichspannungsquelle und dem zweiten Schaltmittel besteht. Insbesondere ist sie mit einem Anschluss zwischen dem dritten und ersten Schaltmittel und mit einem anderen Anschluss zwischen dem zweiten und vierten Schaltmittel angeschlossen. Hierdurch kann die beschriebene gemeinsame Verwendung einer Spuleneinheit für die unterschiedlich beschriebenen Hochsetzstellerbetriebe und Tiefsetzstellerbetriebe realisiert werden und der Schaltungsaufwand wird gering gehalten.

Eine andere Ausführungsform schlägt vor, dass die Gleichspannungsquelle nicht zwischen dem ersten und zweiten Schaltmittel angeschlossen ist, sondern in einer Reihenschaltung mit der Spuleneinheit zu dem ersten und zweiten Schaltmittel parallel geschaltet ist. Dabei ist es im Grunde unerheblich, ob die Gleichspannungsquelle zwischen der ersten Schalteinheit und der Spuleneinheit oder zwischen der zweiten Schalteinheit und der Spuleneinheit angeschlossen ist.

Vorzugsweise sind die Schaltmittel jeweils als Halbleiterschalter ausgebildet und zu jedem Halbleiterschalter ist ein Gleichrichtmittel, insbesondere eine Diode parallel geschaltet. Anstelle des dritten und vierten Schaltmittels ist es auch möglich, nur jeweils ein Gleichrichtmittel alleine vorzusehen, insbesondere dann, wenn die Schaltungsanordnung nur in dem beschriebenen Hochsetzstellerbetrieb bzw. Hochsetzstellermodus betrieben werden soll.

Gemäß einer Ausführungsform wird vorgeschlagen, dass die Gleichspannungsquelle, das erste und zweite Schaltmittel und die Spuleneinheit zusammen in einer Masche angeordnet sind bzw. dass diese vier Elemente eine Masche bilden. Zusammen mit dem zwischen Spuleneinheit und ersten Ausgangsknoten angeschlossenen dritten Schaltmittel und zwischen einem zweiten Anschlusspunkt der Spuleneinheit und dem Ausgangsknoten angeordneten vierten Schaltmittel ist auf einfache Weise eine Schaltungsanordnung erreichbar, die unter Verwendung einer einzigen Spuleneinheit die beiden beschriebenen Hochsetzstellerbetriebe und die beiden beschriebenen Tiefsetzstellerbetriebe gewährleisten kann. Wird anstelle des dritten Schaltmittels und des vierten Schaltmittels jeweils nur ein Gleichrichtmittel verwendet, so ist zumindest auf einfache Weise eine Schaltungsanordnung mit den beiden oben beschriebenen Hochsetzstellerbetrieben erreichbar.

Als Gleichspannungsquelle ist vorzugsweise zwischen dem ersten und zweiten Eingangsknoten ein wiederaufladbarer, elektrischer Batteriespeicher angeordnet oder es ist ein Solargenerator, insbesondere eine Anordnung von Photovoltaikzellen oder Photovoltaikmodulen angeschlossen. Vorzugsweise ist sowohl ein wiederaufladbarer, elektrischer Batteriespeicher als auch ein Solargenerator zwischen dem ersten und zweiten Eingangsknoten angeschlossen, wobei der Batteriespeicher und der Solargenerator hierbei zueinander parallel geschaltet sind. Dies ist eine bevorzugte Ausgestaltung, weil hierdurch elektrische Energie durch den Solargenerator bereitgestellt und auf einfache und kostengünstige Art und Weise und unter Einhaltung von Symmetriesierungsbedingungen in den Gleichspannungszwischenkreis übertragen werden kann. Bei entsprechendem Energiebedarf und wenn der Solargenerator einen solchen Energiebedarf nicht decken kann - beispielsweise in der Nacht -, kann Energie aus dem Batteriespeicher in den Gleichspannungszwischenkreis übertragen werden. Mit derselben Schaltungsanordnung kann der Batteriespeicher bei entsprechenden Bedingungen hinsichtlich Energieangebot und Energiebedarf Energie in den Batteriespeicher übertragen, um diesen ganz oder teilweise aufzuladen. Vorzugsweise sind ein Kondensator und ein Solargenerator in Parallelschaltung zwischen dem ersten und zweiten Eingangsknoten angeschlossen. Hierdurch ist eine kurzzeitige Pufferwirkung erzielbar, die insbesondere Spannungsschwankungen bedingt durch Schalthandlungen reduziert. All dies ist auf einfache kostengünstige und verlustarme Art und Weise insbesondere mit ein- und derselben Schaltungsanordnung grundsätzlich erreichbar. Der Batteriespeicher kann auch direkt oder indirekt über einen parallel dazu angeschlossenen Solargenerator aufgeladen werden. Mit der beschriebenen Schaltungsanordnung ist es somit erfindungsgemäß möglich und wird vorgeschlagen, Energie aus der Gleichspannungsquelle wahlweise so in die erste oder zweite Kondensatoreinheit zu übertragen, dass sich eine auf den Nullpunkt symmetriesierte Spannung am Gleichspannungszwischenkreis ausbildet.

Entsprechend wird vorgeschlagen, die Schaltungsanordnung so zu betreiben, dass bei Bedarf elektrische Energie aus der ersten oder zweiten Kondensatoreinheit so in die Gleichspannungszwischenquelle, insbesondere einen wiederaufladbaren Batteriespeicher übertragen wird, dass die Spannungsaufteilung zwischen der ersten und zweiten Kondensatoreinheit etwa symmetrisch ist.

Wie beschrieben, kann die Symmetriesierung der Zwischenkreisspannung dadurch erreicht werden, dass die Entnahme elektrischer Energie aus der ersten und zweiten Kondensatoreinheit oder das Einspeisen elektrischer Energie in die erste oder zweite Kondensatoreinheit entsprechend zueinander aufgeteilt wird. Je nach Modus ist ohnehin das Übertragen elektrischer Energie von der Gleichspannungsquelle zu den Kondensatoreinheiten oder umgekehrt notwendig und allein dies gezielt auf einander mit der vorgeschlagenen Schaltungsanordnung abzustimmen schafft es, dass die Symmetriesierungsbedingung eingehalten werden kann.

Gemäß einer Variante wird elektrische Energie aus der Gleichspannungsquelle so zu der ersten und zweiten Kondensatoreinheit übertragen, dass sich an der ersten und der zweiten Kondensatoreinheit jeweils eine Spannungsamplitude einstellt, die einem aus dem Gleichspannungszwischenkreis zu erzeugenden sinusförmigen Spannungsverlauf oder Spannungsverlauf mit ähnlichem Verlauf zumindest teilweise nachgeführt wird. Hier wird mittels eines Wechselrichters eine sinusförmige Spannung erzeugt. Eine positive Halbwelle wird im Grunde aus der ersten und eine negative Halbwelle aus der zweiten Kondensatoreinheit gespeist. Bei entsprechender Dimensionierung der Bauteile, insbesondere der jeweiligen Kapazität der ersten und zweiten Kondensatoreinheit kann die Spannung der jeweiligen Kondensatoreinheit dem sinusförmigen Spannungsverlauf zumindest teilweise folgen. Somit braucht die Spannung an der ersten Kondensatoreinheit nur während einer positiven Halbwelle der sinusförmigen Spannung eine hohe Spannungsamplitude aufzuweisen und umgekehrt reicht eine hohe Spannung an der zweiten Kondensatoreinheit aus, während eine negative Halbwelle zu erzeugen ist. Aber auch innerhalb der jeweiligen Halbwelle, kann die Spannung an der ersten bzw. zweiten Kondensatoreinheit dem Sinusverlauf nachgeführt werden. Im optimalen Fall ist nur für jede Spannungsspitze der höchste Spannungswert an der betreffenden Kondensatoreinheit nötig.

Vorzugsweise wird die Schaltungsanordnung gemäß der Erfindung zusammen mit einer Solaranlage verwendet, wobei ein Solargenerator oder eine Solaranlage als Gleichspannungsquelle verwendet wird und entsprechend zwischen dem ersten und zweiten Eingangsknoten angeschlossen ist. Günstig ist es, wenn eine solche Solaranlage um einen Wechselrichter zum Erzeugen einer Wechselspannung aus der Zwischenkreisspannung ergänzt wird. Eine solche Solaranlage kann elektrische Energie durch den Solargenerator erzeugen und auf einfache Weise mit geringen Verlusten und einem geringen Schaltungsaufwand in den Gleichspannungszwischenkreis übertragen. Die Energie aus dem Gleichspannungszwischenkreis kann mittels des Wechselrichters in ein elektrisches Versorgungsnetz eingespeist werden. Je nach Energiebedarf und -angebot ist es möglich, den elektrischen Zwischenspeicher im Grunde zum Puffern von Energie zu verwenden. Auch dies kann mit derselben Schaltungsanordnung auf einfache Weise mit geringem schaltungstechnischen Aufwand und geringem Verlust, insbesondere geringem Verlust im Hochsetzstellerbetrieb, erreicht werden.

Vorzugsweise bildet eine erfindungsgemäße Schaltungsanordnung zusammen mit einem Wechselrichter, der an dem ersten und zweiten Schaltungsausgang angeschlossen ist, eine Einheit, in der die Schaltungsanordnung und der Wechselrichter aufeinander abgestimmt sind. Hierbei können die erste und zweite Kondensatoreinheit zusammen einen Gleichspannungszwischenkreis des Wechselrichters bilden.

Nachfolgend wird die vorliegende Erfindung exemplarisch anhand von Ausführungsbeispielen unter Bezugnahme auf die begleitenden Fig. näher erläutert.
- Fig.1-5: zeigen erfindungsgemäße Schaltungsanordnungen mit angeschlossenem Wechselrichter und wenigstens einer angeschlossenen Gleichspannungsquelle jeweils als vereinfachten Schaltplan.

Zur Vereinfachung werden für gleiche oder gleich wirkende Elemente identische Bezugszeichen verwendet, so dass identische Bezugszeichen nicht identische Elemente bezeichnen können. Insbesondere trägt die Schaltungsanordnung das Bezugszeichen 1 für alle Fig. 1-5, obwohl die Schaltungsanordnungen der unterschiedlichen Fig. nicht identisch sind.

Die Schaltungsanordnung 1 der Fig. 1 ist mit einem Wechselrichter WR verbunden. Eine erste Kondensatoreinheit C₁ mit der ersten Kondensatorspannung U_{P} ist zwischen dem ersten Ausgangsknoten 2 und dem Nullpunkt N angeordnet. Zwischen dem Nullpunkt N und dem zweiten Ausgangsknoten 4 ist die zweite Kondensatoreinheit C₂ mit der zweiten Kondensatorspannung U_{M} angeschlossen. Die erste und zweite Kondensatoreinheit C₁ und C₂ bilden zusammen einen Gleichspannungszwischenkreis 6, mit der Zwischenkreisspannung U_{ZK}. Die Zwischenkreisspannung U_{ZK} berechnet sich zu U_{ZK}=U_{P}+U_{M}.

Parallel zur ersten Kondensatoreinheit C₁ sind die erste Schalteinheit S₁ und die dritte Schalteinheit S₃ zwischen dem ersten Ausgangsknoten 2 und dem Nullpunkt N und damit parallel zur ersten Kondensatoreinheit C₁ angeschlossen. In ähnlicher Weise sind die zweite Schalteinheit S₂ und die vierte Schalteinheit S₄ parallel zur zweiten Kondensatoreinheit C₂ geschaltet. Zu jedem der ersten bis vierten Schalteinheit S₁ bis S₄ ist jeweils eine Diode D₁ bis D₄ als Gleichrichtmittel parallel geschaltet. Eine Gleichspannungsquelle 8 ist zwischen der ersten und zweiten Schalteinheit S₁, S₂, angeschlossen und dabei mit einem Anschluss an dem Nullpunkt N angeschlossen.

Schließlich ist eine Spuleneinheit L vorgesehen, die mit einem ersten Anschlusspunkt zwischen der ersten und dritten Diode D₁ und D₃ und mit einem zweiten Anschlusspunkt zwischen der zweiten und vierten Diode D₂ und D₄ angeschlossen ist.

Die Gleichspannungsquelle 8 ist zwischen dem ersten Eingangsknoten 12 und dem zweiten Eingangsknoten 14 angeschlossen. Die Gleichspannung U_{S} der Gleichspannungsquelle 8 kann beispielsweise etwas weniger als 300 V betragen, wohingegen die Zwischenkreisspannung U_{ZK} über 700 V beträgt, die im vorgesehenen Betrieb zu gleichen Teilen auf die Spannungen U_{P} und UM aufgeteilt sind, so dass U_{P} und UM jeweils über 350 V betragen.

Mit der Schaltungsanordnung der Fig. 1 sind nun die folgenden Betriebsmodi vorgesehen:
1. Bei geschlossenem Schaltmittel S₂ kann durch Pulsen des ersten Schaltmittels S₁ im Hochsetzstellermodus Energie von der Gleichspannungsquelle 8 in die erste Kondensatoreinheit C₁, die auch als oberer Zwischenkreiskondensator C₁ bezeichnet werden kann, geliefert werden.
2. Entsprechend kann bei geschlossenem ersten Schaltmittel S₁ durch Pulsen des zweiten Schaltmittels S₂ im Hochsetzstellermodus Energie von der Gleichspannungsquelle 8 in die zweite Kondensatoreinheit C₂, die auch als unterer Zwischenkreiskondensator C₂ bezeichnet werden kann, geliefert werden.
   Somit kann elektrische Energie aus der Gleichspannunsquelle 8 durch Wahl der beschriebenen Hochsetzstellermodi wahlweise in eine der beiden Kondensatoreinheiten C₁ oder C₂ übertragen werden.
3. Wird die dritte Schalteinheit S₃ gepulst, so wird im Tiefsetzstellermodus Energie aus der ersten, nämlich oberen Kondensatoreinheit C₁ in die Gleichspannungsquelle 8 übertragen.
4. Wird die vierte Schalteinheit S₄ gepulst, so wird Energie aus der zweiten, nämlich unteren Kondensatoreinheit C₂ in die Gleichspannungsquelle 8 übertragen.

Vorteile der vorgeschlagenen Schaltungen sind somit eine geringe Anzahl von Bauelementen und der reduzierte bzw. geringe Spannungshub zwischen der Gleichspannung U_{S} an der Gleichspannungsquelle 8 und der jeweiligen Spannung U_{P} oder UM an der ersten oder zweiten Kondensatoreinheit C₁ oder C₂. Die Spannungen U_{P} und UM können auch als Halbbrückenspannung bezeichnet werden. Durch diesen reduzierten Spannungshub kann der Wirkungsgrad gegenüber anderen Varianten, bei denen ein höherer Spannungshub zu überwinden ist, erhöht werden. Dass die Gleichspannung U_{S} der Gleichspannungsquelle 8 unterhalb der halben Zwischenkreisspannung U_{ZK} liegt, ist eine bevorzugte Randbedingung für den Einsatz der gezeigten Schaltungsanordnung. Ohne Einhaltung dieser bevorzugten Randbedingung ist die Schaltungsanordnung gleichwohl einsetzbar, wobei sich ihre vorteilhaften Wirkungen schmälern können.

Die Schaltungsanordnung 1 der Fig. 2 entspricht der der Fig. 1, wobei der Nullpunkt N nun mit dem zweiten Eingangsknoten 14 verbunden ist. Die Gleichspannungsquelle 8 ist somit an ihrem positiven Spannungsausgang mit dem Nullpunkt N angeschlossen, anstatt mit ihrem negativen Ausgang, wie das in Fig. 1 der Fall war. Ansonsten ist die Wirkungsweise und die bevorzugte Betriebsweise, wie im Zusammenhang mit der Fig. 1 beschrieben wurde. Damit sind die zu Fig. 1 beschriebenen vier Betriebsmodi entsprechend vorgesehen.

Die Schaltungsanordnung 1 der Fig. 3 weist gegenüber den Schaltungsanordnungen 1 der Fig. 1 und Fig. 2 eine Gleichspannungsquelle 8 aus einem Kondensator C_{G} und einem Solargenerator 10 in Parallelschaltung auf, die ebenfalls zwischen dem ersten und zweiten Eingangsknoten 12 und 14 angeschlossen und damit zum Kondensator parallel geschaltet ist. Der Solargenerator 10 steht exemplarisch für eine photovoltaisch erzeugte Gleichspannung, wobei es auf die genaue Ausgestaltung und Anordnung der verwendeten Photovoltaikmodule bzw. Photovoltaikzellen nicht ankommt, soweit die erzeugte Spannung an die Schaltung angepasst ist. Hierbei kann der Solargenerator mit der Gleichspannungsquelle 8 direkt gekoppelt sein. Der Kondensator C_{G} fungiert hier als Glättungskondensator, um für die von dem Solargenerator erzeugte Spannung und für die an den Eingangsknoten angelegte Spannung stabilisierend zu wirken und ein im Zusammenhang mit Fig. 1 beschriebener Tiefsetzstellerbetrieb ist entbehrlich. Entsprechend weist die Schaltungsanordnung 1 gemäß Fig. 3 nur das erste und zweite Schaltmittel S₁ und S₂ auf. Auf die in den Fig. 1 und 2 gezeigten dritten und vierten Schaltmittel S₃ und S₄ ist hier verzichtet worden und lediglich die betreffenden Gleichrichtmittel, nämlich die dritte und vierte Diode D₃ und D₄ sind vorhanden. Ansonsten entspricht die Schaltungsanordnung 1 der Fig. 3 der Schaltungsanordnung 1 der Fig. 1. Auch die beschriebenen Hochsetzstellermodi sind auf die Schaltungsanordnung 1 der Fig. 3 übertragbar.

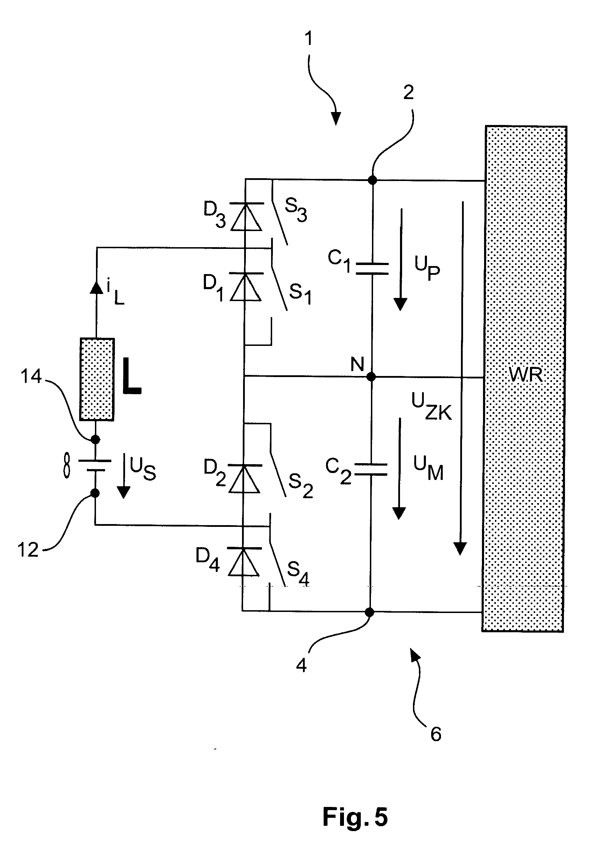

Die Schaltungsanordnung 1 der Fig. 4 entspricht der der Fig. 3 mit dem Unterschied, dass der Nullpunkt N am zweiten Eingangsknoten 14 und damit am positiven Anschluss der Gleichspannungsquelle 8 und damit auch des Solargenerators 10 angeschlossen ist. Fig. 5 zeigt eine weitere Variante der Schaltungsanordnung 1, die im Wesentlichen den Schaltungsanordnungen 1 gemäß Fig. 1 oder 2 entspricht. Die Schaltungsanordnung 1 der Fig. 5 weist jedoch die Gleichspannungsquelle 8 in demselben Zweig auf, der auch in der Spuleneinheit L angeordnet ist. Diese Ausgestaltung kann gewählt werden, wenn keine Notwendigkeit besteht, die Gleichspannungsquelle 8 auf einem festen Potential zu halten. Dann hat diese Ausführungsform den Vorteil, dass sich in den jeweiligen Hochsetzstellermodi bzw. Tiefsetzstellermodi jeweils gleiche Pulsmuster einstellen lassen bzw. sich einstellen, unabhängig davon, ob Energie mit der ersten Kondensatoreinheit oder der zweiten Kondensatoreinheit, also mit der oberen oder unteren Zwischenkreishälfte ausgetauscht wird. Die Ausführungsform gemäß Fig. 5 weist auch den Vorteil einer geringen Stromwelligkeit auf, die kleiner als bei den übrigen dargestellten Ausführungsformen sein dürfte. Dies ist dadurch begründet, dass zum Ab- bzw. Aufmagnetisieren der Spuleneinheit L, die hier und in den anderen Ausführungsformen auch als Drossel bezeichnet werden kann, die Gleichspannung U_{S}, die auch als Batteriespannung bezeichnet werden kann, und die Differenz zwischen der halben Zwischenkreisspannung U_{ZK} - bei angenommener symmetrischer Aufteilung - und der Batteriespannung genutzt wird.

Somit kommt die vorgeschlagene Schaltungsanordnung gemäß der vorliegenden Erfindung, und damit gemäß jeder der gezeigten Ausführungsformen mit nur einer Spuleneinheit, die auch als Speicherdrossel ausgebildet und bezeichnet werden kann, und vier Schaltmittel aus. Sie ermöglicht neben dem bidirektionalen Energiefluss auch die Symmetriesierung des Gleichspannungszwischenkreises. Die vorgeschlagenen Schaltungsanordnungen ermöglichen somit einen hohen Wirkungsgrad und geringe Stromwelligkeit in der Speicherdrossel im Vergleich zu einer Lösung, die direkt den gesamten Gleichspannungszwischenkreis speist, die also in die Spannung auf die gesamte Zwischenkreisspannung heben muss.

Gemäß der in den Fig. 1 bis 4 gezeigten Ausführungsformen können die Energiespeicher, nämlich die Gleichspannungsquelle 8 und/oder der Solargenerator 10 auf den Nullpunkt N bezogen werden und unterliegen somit keinen Potentialsprüngen gegenüber dem Nullpunkt N bzw. einem Erdanschluss PE.

Die in den Fig. 3 und 4 gezeigten Ausführungsformen bieten die Möglichkeit einer Anwendung zur Ankopplung eines Solargenerators, wie dort gezeigt ist. Durch diese Schaltungsanordnung kann ein Solargenerator auch bei trafoloser Topologie flexibel an einem Plus- oder Minuspol geerdet werden.

Bei Verwendung der Ausgestaltungen der Figuren 1, 2 und 5 kann gegebenenfalls die Zwischenkreisspannung der Netzspannung nachgeführt werden. D.h. bei geeigneter Auslegung eines Eingangskondensators zur Stützung der Gleichspannung U_{S} der Gleichspannungsquelle 8 und bei geeigneter Auslegung des Gleichspannungszwischenkreises kann es möglich sein, die Zwischenkreisspannung U_{ZK} dem Netzsinus folgen zu lassen.

## Patentansprüche

1. Schaltungsanordnung (1) zum Bereitstellen einer Zwischenkreisspannung (U_{ZK}), wobei die Zwischenkreisspannung (U_{ZK}) zwischen einem ersten und zweiten Ausgangsknoten (2, 4) anliegt, umfassend:
- einen zwischen dem ersten Ausgangsknoten (2) und einem Nullpunkt (N) angeordneten ersten Spannungsausgang zum Anschließen einer ersten Kondensatoreinheit (C₁),
- einen zwischen dem Nullpunkt (N) und dem zweiten Ausgangsknoten (4) angeordneten zweiten Spannungsausgang zum Anschließen einer zweiten Kondensatoreinheit (C₂),
- einen ersten und einen zweiten Eingangsknoten (12, 14) zum Anschließen einer Gleichspannungsquelle (8) zum Bereitstellen einer Gleichspannung (U_{S}) mit einer kleineren Spannungsamplitude als die Amplitude der Zwischenkreisspannung (U_{ZK}),
- eine Spuleneinheit (L),
- ein erstes Schaltmittel (S₁), das zusammen mit der Spuleneinheit (L) im Hochsetzstellerbetrieb betreibbar ist, um elektrische Energie aus der Gleichspannungsquelle (8) in die erste Kondensatoreinheit (C₁) zu übertragen und
- ein zweites Schaltmittel (S₂), das zusammen mit der Spuleneinheit (L) im Hochsetzstellerbetrieb betreibbar ist, um elektrische Energie aus der Gleichspannungsquelle (8) in die zweite Kondensatoreinheit (C₂) zu übertragen.

2. Schaltungsanordnung (1) nach Anspruch 1,
**gekennzeichnet durch**
- ein drittes Schaltmittel (S₃), das zusammen mit der Spuleneinheit (L) im Tiefsetzstellerbetrieb betreibbar ist, um elektrische Energie aus der ersten Kondensatoreinheit (C₁) in die Gleichspannungsquelle (8) zu übertragen und
- ein viertes Schaltmittel (S₄), das zusammen mit der Spuleneinheit (L) im Tiefsetzstellerbetrieb betreibbar ist, um elektrische Energie aus der zweiten Kondensatoreinheit (C₂) in die Gleichspannungsquelle (8) zu übertragen.

3. Schaltungsanordnung (1) nach Anspruch 1 oder 2,
**dadurch gekennzeichnet, dass**
- das erste Schaltmittel (S₁) in Reihe mit einem bzw. dem dritten Schaltmittel (S₃) zwischen dem Nullpunkt (N) und dem ersten Ausgangsknoten (2) parallel zu der ersten Kondensatoreinheit (C₁) angeschlossen ist und
- das zweite Schaltmittel (S₂) in Reihe mit einem bzw. dem vierten Schaltmittel (S₄) zwischen dem Nullpunkt (N) und dem zweiten Ausgangsknoten (4) parallel zu der zweiten Kondensatoreinheit (C₂) angeschlossen ist.

4. Schaltungsanordnung (1) nach einem der vorstehenden Ansprüche,
**dadurch gekennzeichnet, dass** die Gleichspannungsquelle (8)
- zwischen dem ersten Schaltmittel (S₁) und dem Nullpunkt (N),
- zwischen dem zweiten Schaltmittel (S₂) und dem Nullpunkt (N),
- zwischen dem ersten Schaltmittel (S₁) und der Spuleneinheit (L) oder
- zwischen dem zweiten Schaltmittel (S₂) und der Spuleneinheit (L) angeschlossen ist.

5. Schaltungsanordnung (1) nach einem der vorstehenden Ansprüche,
**dadurch gekennzeichnet, dass** jedes Schaltmittel (S₁, S₂, S₃, S₄) wenigstens einen Halbleiterschalter aufweist, insbesondere dass jedes Schaltmittel als Halbleiterschalter ausgebildet ist, und dass zu jedem Halbleiterschalter jeweils ein Gleichrichtmittel (D₁, D₂, D₃, D₄), insbesondere eine Diode parallel geschaltet ist.

6. Schaltungsanordnung (1) nach einem der vorstehenden Ansprüche,
**dadurch gekennzeichnet, dass** bei bestimmungsgemäß zwischen dem ersten und zweiten Eingangsknoten (12, 14) angeschlossener Gleichspannungsquelle (8) das erste Schaltmittel (S₁), das zweite Schaltmittel (S₂), die Spuleneinheit (L) und die Gleichspannungsquelle (8) zusammen in einer Masche angeordnet sind und/oder zusammen eine Masche bilden.

7. Schaltungsanordnung (1) nach einem der vorstehenden Ansprüche,
**dadurch gekennzeichnet, dass** als Gleichspannungsquelle (8) zwischen dem ersten und zweiten Eingangsknoten (12, 14)
- ein wiederaufladbarer, elektrischer Batteriespeicher,
- ein Solargenerator (10),
- ein wiederaufladbarer, elektrischer Batteriespeicher und ein Solargenerator (10) in Parallelschaltung, und/oder
- ein Kondensator und ein Solargenerator (10) in Parallelschaltung angeschlossen ist bzw. sind.

8. Verfahren zum Übertragen elektrischer Energie zwischen einer Gleichspannungsquelle (8) und einem elektrischen Gleichspannungszwischenkreis (6), in einer Schaltungsanordnung (1) nach einem der vorstehenden Ansprüche wobei
- das erstes Schaltmittel (S₁) zusammen mit der Spuleneinheit (L) im Hochsetzstellerbetrieb betrieben wird, um elektrische Energie aus der Gleichspannungsquelle (8) in die erste Kondensatoreinheit (C₁) zu übertragen und
- das zweite Schaltmittel (S₂) zusammen mit der Spuleneinheit (L) im Hochsetzstellerbetrieb betrieben wird, um elektrische Energie aus der Gleichspannungsquelle (8) in die zweite Kondensatoreinheit (C₂) zu übertragen,
wobei das Übertragen elektrischer Energie in die erste Kondensatoreinheit (C₁) und das Übertragen elektrischer Energie in die zweite Kondensatoreinheit (C₂) so gesteuert wird, dass sich an der ersten und der zweiten Kondensatoreinheit (C₁, C₂) etwa die gleiche Spannungsamplitude einstellt oder so, dass
sich an der ersten und der zweiten Kondensatoreinheit (C₁, C₂) jeweils eine Spannungsamplitude einstellt, die einem aus dem Gleichspannungszwischenkreis zu erzeugenden sinusförmigen Spannungsverlauf zumindest teilweise nachgeführt wird.

9. Verfahren nach Anspruch 8, wobei
- ein drittes bzw. das dritte Schaltmittel (S₃) zusammen mit der Spuleneinheit (L) im Tiefsetzstellerbetrieb betrieben wird, um elektrische Energie aus der ersten Kondensatoreinheit (C₁) in die Gleichspannungsquelle (8) zu übertragen und
- ein viertes bzw. das vierte Schaltmittel (S₄) zusammen mit der Spuleneinheit (L) im Tiefsetzstellerbetrieb betrieben wird, um elektrische Energie aus der zweiten Kondensatoreinheit (C₂) in die Gleichspannungsquelle (8) zu übertragen,
wobei das Übertragen der elektrischen Energie so gesteuert wird, dass sich an der ersten und der zweiten Kondensatoreinheit (C₁, C₂) etwa die gleiche Spannungsamplitude einstellt und wobei abhängig von der Zwischenkreisspannung (U_{ZK}), abhängig eines Energieangebotes oder eines Energiebedarfs an der Gleichspannungsquelle (8) und/oder abhängig einer von außen vorgegebenen Vorgabe elektrische Energie von der Gleichspannungsquelle (8) zu den Kondensatoreinheiten oder von den Kondensatoreinheiten zur Gleichspannungsquelle (8) übertragen wird.

10. Solaranlage mit wenigstens einem Solargenerator (10) und einer Schaltungsanordnung (1) nach einem der Ansprüche 1 bis 7, wobei der Solargenerator (10) zwischen dem ersten und dem zweiten Eingangsknoten (12, 14) angeschlossen ist.

11. Solaranlage nach Anspruch 10,
**gekennzeichnet durch** einen an dem ersten und zweiten Ausgangsknoten (2, 4) der Schaltungsanordnung (1) angeschlossenen Wechselrichter (WR) zum Erzeugen einer Wechselspannung aus der Zwischenkreisspannung (U_{ZK}), wobei zwischen dem ersten Ausgangsknoten (2) und dem Nullpunkt (N) ein erster Zwischenkreiskondensator (C₁) angeschlossen ist und zwischen dem Nullpunkt (N) und dem zweiten Ausgangsknoten (4) ein zweiter Zwischenkreiskondensator (C₂) angeschlossen ist.

12. Wechselrichter (WR) zum Erzeugen einer Wechselspannung aus einer Zwischenkreisspannung (U_{ZK}), umfassend eine Schaltungsanordnung nach einem der Ansprüche 1 bis 7, wobei zwischen dem ersten Ausgangsknoten (2) und dem Nullpunkt (N) ein erster Zwischenkreiskondensator (C₁) angeschlossen ist und zwischen dem Nullpunkt (N) und dem zweiten Ausgangsknoten (4) ein zweiter Zwischenkreiskondensator (C₂) angeschlossen ist.
